**Europäisches Patentamt**

**European Patent Office**

**Office européen des brevets**

(19)

(11) Veröffentlichungsnummer: **0 053 269**
**B1**

(12) **EUROPÄISCHE PATENTSCHRIFT**

(45) Veröffentlichungstag der Patentschrift:
**11.07.84**

(51) Int. Cl.³: **F 26 B 13/10,** F 26 B 21/02,
F 26 B 25/00

(21) Anmeldenummer: **81108633.9**

(22) Anmeldetag: **21.10.81**

(54) **Vorrichtung zur Wärmebehandlung von bahnförmigem Gut.**

(30) Priorität: **03.12.80 DE 3045602**
**10.02.81 DE 3104556**

(43) Veröffentlichungstag der Anmeldung:
**09.06.82 Patentblatt 82/23**

(45) Bekanntmachung des Hinweises auf die Patenterteilung:
**11.07.84 Patentblatt 84/28**

(84) Benannte Vertragsstaaten:
**DE FR GB IT**

(56) Entgegenhaltungen:
**AU - A - 424 316**
**DE - A - 2 544 590**
**DE - A - 2 939 902**
**GB - A - 1 570 276**
**US - A - 4 216 592**

(73) Patentinhaber: **Brückner Trockentechnik GmbH & Co. KG, Benzstrasse 8-10, D-7250 Leonberg (DE)**

(72) Erfinder: **Gresens, Harry, Max-Eyth-Strasse 33, D-7141 Benningen/Neckar (DE)**

(74) Vertreter: **Tetzner, Volkmar, Dr.-Ing. Dr. Jur., Van-Gogh-Strasse 3, D-8000 München 71 (DE)**

## Beschreibung

Die Erfindung betrifft eine Vorrichtung zur Wärmebehandlung von bahnförmigem Gut in mehreren Behandlungszonen mittels Heissluft, die innerhalb der einzelnen Behandlungszonen als Umluft umgewälzt wird, wobei ein Teil des umgewälzten Luftstromes als Fortluft aus der Behandlungszone abgezogen und durch Frischluft ersetzt wird, enthaltend in den einzelnen Behandlungszonen einen Umluftventilator, eine Einrichtung zur Aufheizung des Umluftstromes, sowie einen Wärmetauscher zur Erwärmung der Frischluft durch die Fortluft.

Eine Vorrichtung der vorstehend genannten Art ist beispielsweise durch das DE-Gm 79 28 210 bekannt. Hierbei wird die Frischluft durch den Umluftventilator angesaugt, wobei der zur Erwärmung der Frischluft durch die Fortluft dienende Wärmetauscher und ein zur Aufheizung des Umluftstromes dienender Wärmetauscher gewissermassen parallel an die Saugseite des Umluftventilators angeschlossen sind. Eine solche Ausführung ist mit wesentlichen Nachteilen behaftet.

Mit einer Verschmutzung des zur Erwärmung der Frischluft dienenden Wärmetauschers ändert sich die vom Umluftventilator angesaugte Frischluftmenge. Ungünstig ist ferner, dass die Temperaturen des erwärmten Umluftstromes einerseits und des erwärmten Frischluftstromes andererseits recht unterschiedlich sind. Die unterschiedlichen Temperaturen und Zähigkeiten der beiden Luftströme, die sich erst auf der Ansaugeseite des Umluftventilators vereinigen, können zu einer ungleichmässigen Temperatur am bahnförmigen Gut führen.

Der Erfindung liegt daher die Aufgabe zugrunde, unter Vermeidung dieser Nachteile eine Vorrichtung der eingangs genannten Art zu schaffen, die sich durch eine besondere Gleichmässigkeit (in mengenmässiger, temperaturmässiger und zeitlicher Hinsicht) des dem bahnförmigen Gut zugeführten Heissluftstromes sowie durch einen einfachen konstruktiven Aufbau auszeichnet.

Diese Aufgabe wird erfindungsgemäss durch die Kombination folgender Merkmale gelöst:

a) zur Zuführung der Frischluft ist ein gesonderter, zwischen der Aussenatmosphäre und dem Wärmetauscher angeordneter Ventilator vorgesehen.

b) die Frischluft-Austrittsseite des Wärmetauschers mündet in den Teil des Innenraumes der Behandlungszone ein, an den die Ansaugseite der Einrichtung zur Aufheizung des Umluftstromes angeschlossen ist,

c) die Ansaugseite des Umluftventilators (3) ist an der Austrittsseite der Einrichtung zur Aufheizung des Umluftstromes angeschlossen.

Im Unterschied zu dem eingangs erläuterten bekannten Stand der Technik wird bei der erfindungsgemässen Ausführung der durch die Fortluft erwärmte Frischluftstrom nicht nach der Hauptwärmequelle (nämlich der Einrichtung zur Aufheizung des Umluftstromes) dem Umluftstrom zugeführt sondern bereits vorher. Infolgedessen durchsetzen der Umluftstrom und die mittels der Fortluft bereits erwärmte Frischluft gemeinsam diese Hauptwärmequelle, was eine hohe (zweistufige) Aufheizung des Frischluftstromes und eine gute Vermischung von Frischluft und Umluft gewährleistet, ehe der Heissluftstrom wieder in Berührung mit dem bahnförmigen Gut kommt.

Da die Zuführung der Frischluft bei der erfindungsgemässen Lösung durch einen gesonderten, zweckmässig in seiner Drehzahl regelbaren Ventilator erfolgt, kann die zugeführte Frischluftmenge ausserordentlich reinfühlig auf den Bedarf der Maschine eingestellt werden. Eine im Laufe der Betriebszeit etwa auftretende Verschmutzung der Frischluftseite des Wärmetauschers kann hierbei ohne weiteres durch Anpassung der Drehzahl des Ventilators ausgesteuert werden.

Vorteilhaft ist bei der erfindungsgemässen Lösung ferner, dass sie auch bei direkt beheizten Maschinen eingesetzt werden kann, d.h. bei Maschinen, deren Einrichtung zur Aufheizung des Umluftstromes durch eine Brennkammer mit direkter Beheizung des Umluftstromes gebildet wird. Bei derartigen Maschinen ist nämlich der Unterdruck auf der Saugseite des Umluft-Ventilators so gering, dass mit der eingangs geschilderten bekannten Ausführung (mit unmittelbarer Ansaugung der Frischluft durch den Umluftventilator) keine ausreichende Frischluftzufuhr unter allen Betriebsverhältnissen gewährleistet ist.

Da eine Vorrichtung der genannten Art in ihrem Innern verhältnismässig hoch angesetzt wird, ihre äussere Umgebung jedoch demgegenüber relativ kühl ist, muss darauf geachtet werden, dass durch Temperaturerhöhungen der umgewälzten Umluft die Druckverhältnisse innerhalb der Vorrichtung so geregelt werden, dass keine heisse gegebenenfalls mit Öldämpfen und dergleichen belastete Umluft durch Gehäuseschlitze frei nach aussen durchtreten kann. Bei bekannten Vorrichtungen versucht man daher so vorzugehen, dass man die Menge der Fortluft aus dem umgewälzten Luftstrom in Abhängigkeit von der Feuchte dieser Fortluft regelt. Wenn dabei die Trocknungsleistung ansteigt, muss auch die Fortluftmenge steigen, um eine Übersättigung der Umluft mit Wasserdampf zu verhindern. Bei den zur Wärmerückgewinnung aus der Fortluft eingesetzten Wärmetauschern (zur Erwärmung der Frischluft) ist es dann jedoch nicht möglich, diese in der gewünschten Weise den Abluftmengen-Schwankungen anzupassen, so dass zur Vermeidung eines zu ungünstigen Fortluft/Frischluft-Verhältnisses die Frischluftmenge im allgemeinen der geringsten Fortluftmenge angepasst und somit bewusst ein schlechter Wirkungsgrad zumindest des Wärmetauschers für die Wärmerückgewinnung aus der Fortluft in Kauf genommen wird.

Zur Vermeidung des zuvorgenannten Nachteiles wird daher ferner ein Verfahren zum Betrieb der erfindungsgemässen Vorrichtung vorgeschlagen, bei dem die zugeführte Frischluft gleichfalls in Abhängigkeit von der Feuchte der Fortluft geregelt wird. Die Folge dieser erfindungsgemässen Massnahme ist, dass die Vorrichtung bei einer kleinen Trockenleistung mit einer kleinen Fortluftmenge und auch mit einer kleinen Frischluftmenge, dagegen bei grosser Trockenleistung aber mit der erforderlichen grossen Fortluftmenge und der möglichen grossen Frischluftmenge automatisch betrieben werden kann. Es ergibt sich auf diese Weise ein gegenüber bekannten Ausführungen erheblich verbesserter Wirkungsgrad, und zwar insbesondere für die Wärmerückgewinnung aus der Fortluft über den Wärmetauscher.

Weitere zweckmässige Ausgestaltungen der Erfindung sind Gegenstand der übrigen Unteransprüche und werden im Zusammenhang mit der folgenden Beschreibung eines in der Zeichnung veranschaulichten Ausführungsbeispiels näher erläutert.

Es zeigen

Fig. 1 ein Prinzipschema der erfindungsgemässen Vorrichtung;

Fig. 2, 3 und 4 Querschnitt, Aufsicht und Seitenriss eines praktischen Ausführungsbeispieles der erfindungsgemässen Vorrichtung;

Fig. 5 ein Fliessschema zur Erläuterung des Verfahrens zum Betrieb der Wärmebehandlungsvorrichtung.

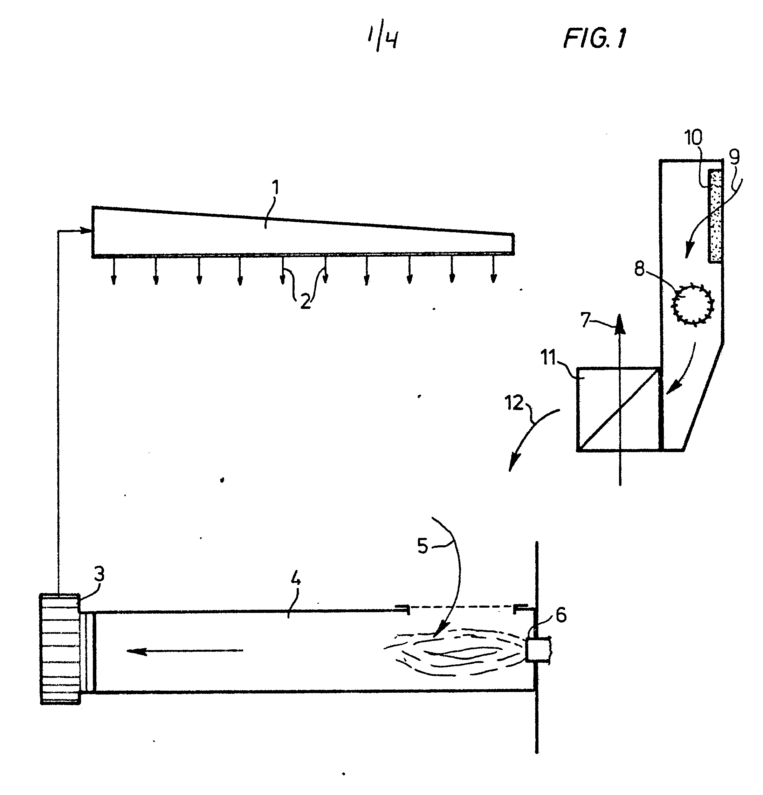

Fig. 1 zeigt in schematischer Form ein Feld (d.h. eine Behandlungszone) einer Spannmaschine zur Wärmebehandlung von bahnförmigem Gut mittels Heissluft. In diese Behandlungszone sind Einrichtungen zur Wärmerückgewinnung integriert.

Im einzelnen enthält die Behandlungszone einen oder mehrere Düsenkästen 1, aus deren Düsen die Heissluft (Pfeile 2) dem nicht dargestellten, kontinuierlich bewegten bahnförmigen Gut zugeführt wird. Die Heissluft wird innerhalb der Behandlungszone durch einen Umluftventilator 3 umgewälzt. Zur Aufheizung dieses Umluftstromes dient eine Brennkammer 4, in der der in die Brennkammer 4 eintretende Luftstrom (Pfeil 5) durch einen Brenner 6 direkt aufgeheizt wird.

Ein Teil des umgewälzten Luftstromes wird laufend als Fortluft (Pfeil 7) aus der Behandlungszone abgezogen und durch Frischluft ersetzt, die durch einen Ventilator 8 von der Aussenatmosphäre eingesaugt wird (Pfeil 9), hierbei einen Filter 10 durchsetzt, dann in einem Wärmetauscher 11 durch die Fortluft (Pfeil 7) erwärmt wird und anschliessend in den Innenraum der Behandlungszone eintritt (Pfeil 12).

Die Frischluft-Austrittsseite des Wärmetauschers 11 mündet somit in den Teil des Innenraumes der Behandlungszone ein, an den die Ansaugeseite der zur Aufheizung des Umluftstromes dienenden Einrichtung (Brennkammer 4) angeschlossen ist. Der Frischluftstrom wird damit zweistufig erwärmt: Zunächst im Wärmetauscher 11 durch die Fortluft unter Wärmerückgewinnung, anschliessend zusammen mit dem Umluftstrom in der Brennkammer.

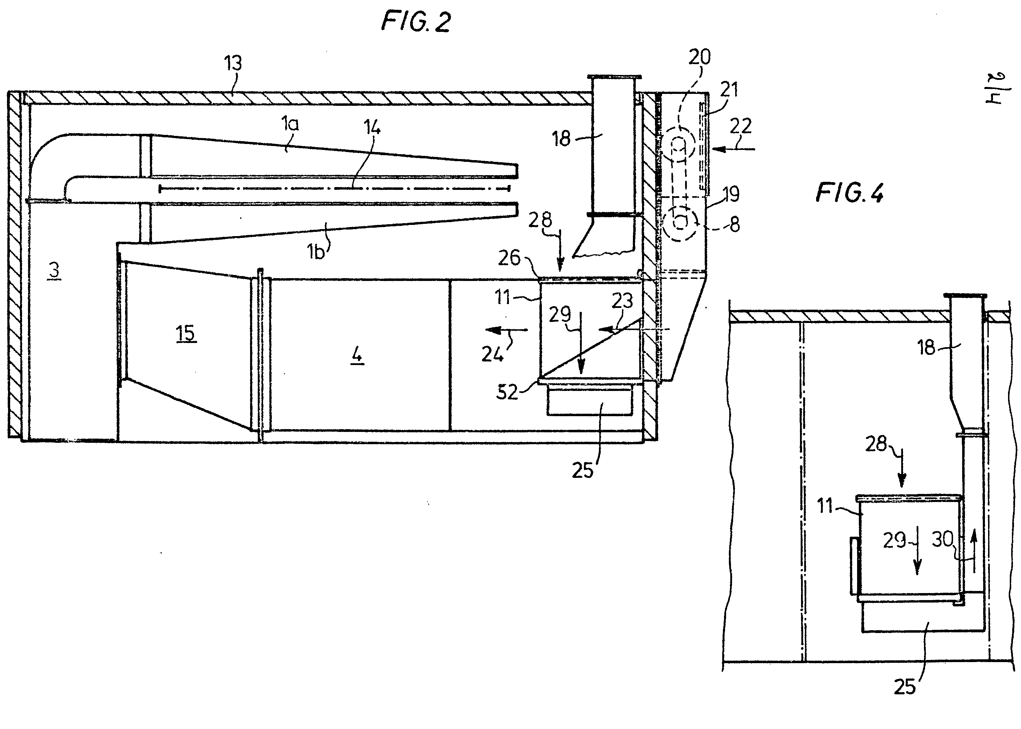

Die Fig. 2 bis 4 veranschaulichen ein praktisches Ausführungsbeispiel des in Fig. 1 schematisch dargestellten Spannmaschinenfeldes.

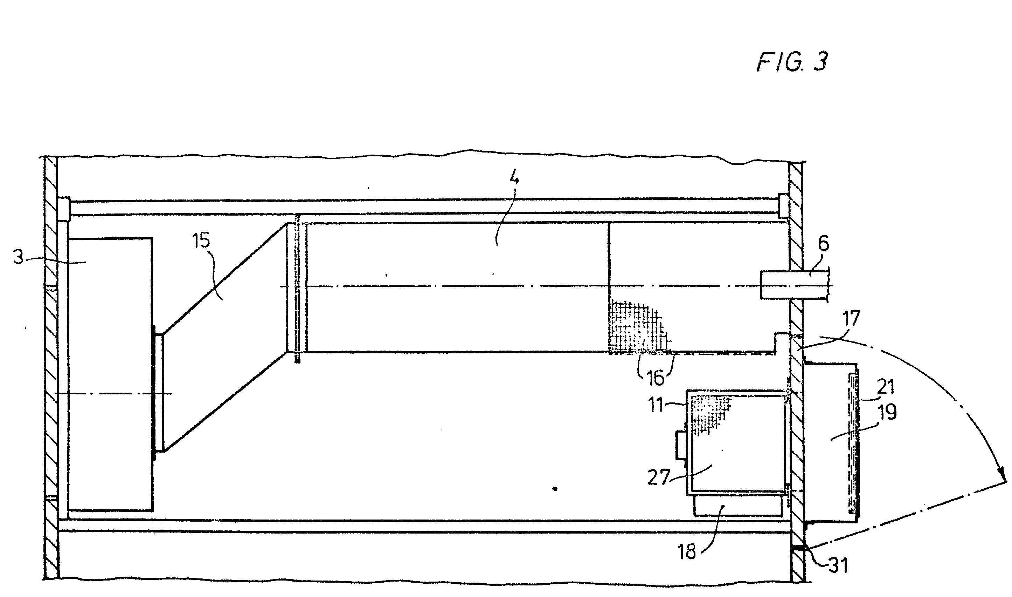

In dem nach aussen isolierten Gehäuse 13 sind oberhalb und unterhalb der Warenbahn 14 Düsenkästen 1a bzw. 1b vorgesehen, die an den Umluftventilator 3 angeschlossen sind. Der Ventilator 3 ist über einen Ansaugstutzen 15 mit der Brennkammer 4 verbunden, in die durch die rechte Seitenwand des Gehäuses 13 der Brenner 6 (Fig. 3) hineinragt und die in ihrem an den Brenner 6 anschliessend vorderen Bereich mit Sieben 16 versehenen Lufteintrittsöffnungen aufweist.

Ein als schenkbare Tür 17 ausgebildeter Teil der Seitenwand trägt den Wärmetauscher 11 und einen an der Aussenseite der Isolierung der Behandlungszone angeordneten Frischluft-Zuführungsschacht 19. Ein Fortluft-Abführungsschacht 18 ist ortsfest an der Innenwand des Gehäuses befestigt und durch geeignete Luftführungs- und Dichtungselemente mit der Fortluft-Austrittsseite des Wärmetauschers 11 verbunden.

In dem Frischluft-Zuführungsschacht 19 ist der in seiner Drehzahl regelbare Ventilator 8 zusammen mit seinem Antriebsmotor 20 angeordnet. Der Ventilator ist als Querstrom-Ventilator mit 180°-Durchgang ausgebildet. Auf der Ansaugseite des Frischluft-Zuführungsschachtes 19 ist ein Filter 21 vorgesehen. Die Frischluft tritt somit durch den Filter 21 in den Frischluft-Zuführungsschacht 19 ein (Pfeil 22), durchströmt diesen Schacht 19 von oben nach unten, durchsetzt dann den Wärmetauscher 11 in etwa horizontaler Richtung (Pfeil 23) und tritt dann (Pfeil 24) in den Innenraum der Behandlungszone ein.

Am unteren Teil des Wärmetauschers 11 ist eine Kondensat-Auffangwanne 25 vorhanden, die schubladenartig (in der Darstellung gemäss Fig. 2 nach links) herausziehbar ist. An diese Kondensat-Auffangwanne 25 schliesst sich der nach oben führende Fortluft-Abführungsschacht 18 an. Der Wärmetauscher 11 ist leicht lösbar durch Eigengewicht in einem Rahmen 52 gehalten. Ein oberer Klemmrahmen 26, der durch Scharniere gelenkig mit der Tür 17 verbunden ist und einen Filter 27 trägt, sorgt für die erforderliche Klemmspannung zwischen dem Wärmetauscher und der Tür. Die Fortluft wird aus dem Innenraum der Behandlungszone durch den Filter 27 angesaugt (Pfeil 28), durchsetzt dann den Kreuzstrom-Wärmetauscher 11 von oben nach unten (Pfeil 29), wobei Kondensat in der Wanne 25 ausfällt, wird dann umgelenkt und durchströmt den Fortluft-Abführungsschacht 18 von unten nach oben (Pfeil 30).

Wird die Tür 17 um ihren Drehpunkt 31 in die in Fig. 3 angedeutete Lage geschwenkt, so sind der Wärmetauscher 11 der Filter 27 und die Kondensat-Auffangwanne 25 für Wartungsarbeiten frei zugänglich.

Während bei dem dargestellten Ausführungsbeispiel die Einrichtung zur Aufheizung des Umluftstromes durch eine Brennkammer mit direkter Beheizung des Umluftstromes gebildet wird, sind im Rahmen der Erfindung auch Ausführungen möglich, bei denen diese Einrichtung zur Aufheizung des Umluftstromes in Form eines indirekten Wärmetauschers ausgebildet ist.

Wie bereits weiter oben kurz erläutert worden ist, wird es als besonders zweckmässig angesehen, die erläuterte Wärmebehandlungsvorrichtung nach einem Verfahren zu betreiben, bei dem die Menge der Fortluft in Abhängigkeit von der Feuchte der Fortluft und die zugeführte Frischluft gleichfalls in Abhängigkeit von der Feuchte der Fortluft geregelt werden.

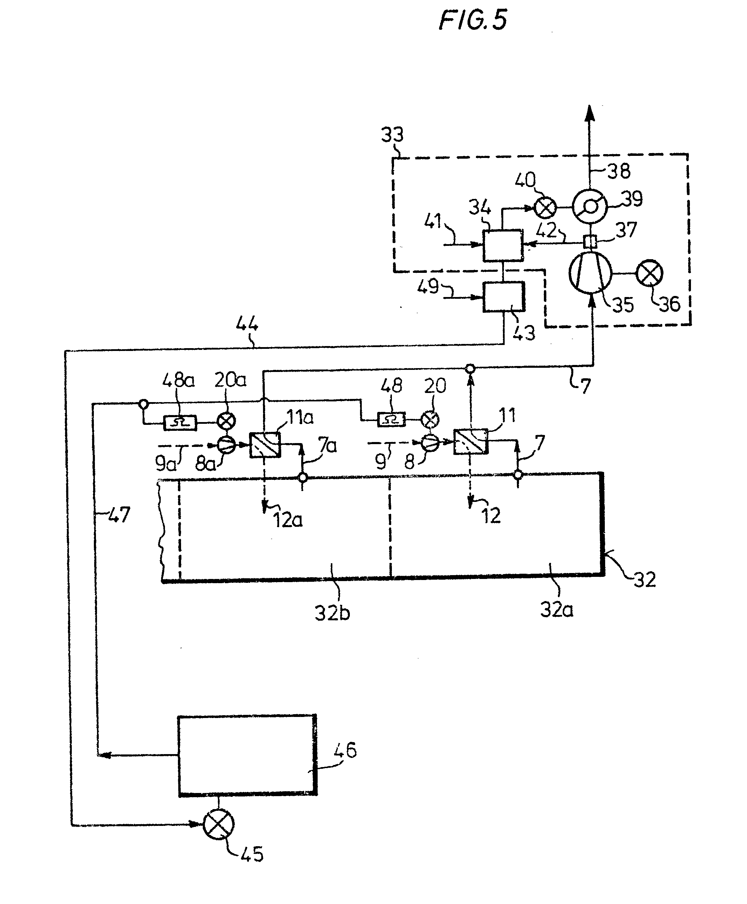

Die Durchführung dieses Verfahrens sei im folgenden anhand der Fig. 5 beschrieben, und zwar im Zusammenhang mit einer als Spannmaschine 32 ausgebildeten Wärmebehandlungsvorrichtung.

Die Spannmaschine 32 enthält beispielsweise zwei aufeinanderfolgende Behandlungszonen 32a, 32b, die je in der zuvor anhand der Fig. 1 bis 4 beschriebenen Form ausgebildet sein und arbeiten können; es werden daher auch die zur Erläuterung des Regelverfahrens notwendigen und bereits im Zusammenhang mit den obigen Ausführungsformen beschriebenen Anlagenteile mit den gleichen Bezugszeichen (insbesondere Fig. 1) verwendet, wobei lediglich für die zweite Behandlungszone 32b jeweils der Buchstabe 1 hinzugeführt ist. In Fig. 5 ist eine gestrichelt eingerahmte Regeleinrichtung 33 zu erkennen, die für alle Behandlungszonen 32a, 32b gemeinsam ist und zur Konstanthaltung der Feuchte der Fortluft 7 durch Regelung der Fortluftmenge dient. Die Regeleinrichtung 33 enthält insgesamt einen Regler 34, einen Fortluftventilator 35 mit Antriebsmotor 36, ein Feuchtemessgerät 37 in der Fortluftleitung 38 sowie eine Drosselklappe 39 mit einem zugeordneten Stellglied 40. Dem Regler 34 wird bei 41 ein Sollwert eingegeben, während bei 42 der vom Feuchtemessgerät herangeführte Ist-Wert eingegeben wird; von dem Regler 34 geht eine Steuerverbindung zum Stellglied 40 der Drosselklappe 39.

Mit Hilfe dieser Regeleinrichtung 33 ist es somit zunächst einmal möglich, laufend die Ist-Feuchte der Fortluft in der Fortluftleitung 38 zu messen und den festgestellten Wert dem Regler 34 einzugeben, in dem dieser festgestellte Ist-Wert mit dem bei 41 eingegebenen Sollwert verglichen wird. Falls eine Regelung der Fortluftmenge erforderlich wird, erfolgt ein Stellsignal zum Stellglied 40, über das die Drosselklappe 39 entsprechend verstellt wird.

An die Regeleinrichtung 33, insbesondere an den Regler 34, ist ferner ein Folgeregler 43 angeschlossen, der zur gemeinsamen Regelung der Frischluft-Ventilatoren 8, 8a der einzelnen Behandlungszonen 32a, 32b dient. Zu diesem Zweck ist der Folgeregler 43 über eine Leitung 44 zur Übermittlung eines Stellsignals mit einem Stellantrieb 45 verbunden, der einem Transformator (beispielsweise einem Ringkerntransformator) 46 zugeordnet ist. Mit Hilfe des Stellantriebes 45 und des Transformators 46 kann über eine Verbindungsleitung 47 und Widerstände 48, 48a die Drehzahl zumindest eines der Antriebsmotoren 20 bzw. 20a der Frischluft-Ventilatoren 8 bzw. 8a durch Spannungsänderung variiert werden.

Wenn somit eine Änderung in der Feuchte der Fortluft mit Hilfe des Feuchtemessgerätes 37 festgestellt wird, dann wird durch den Regler 34 nicht nur die Fortluftmenge (über Drosselklappe 39), sondern über den Folgeregler 43, den Stellantrieb 45, den Trafo 46 und die Frischluftventilator-Antriebe auch die Frischluftzufuhr in Abhängigkeit von der Feuchte der Fortluft neu eingeregelt.

Der Folgeregler 43 kann mit einem einstellbaren Verhältnis des Sollwertes (Eingabe bei 49) in Abhängigkeit von der Fortluftmengenregelung den Transformator 46 für die Drehzahl der Frischluft-Ventilatoren 8, 8a in gewünschter Weise beeinflussen.

Um die einzelnen Drehzahlen der Frischluft-Ventilatoren 8, 8a bei der Inbetriebsetzung der Spannmaschine 32 besonders gut justieren zu können, sind in den zugehörigen Teilen der Schaltung des Folgereglers (insbesondere in der Verbindungsleitung 47) die Widerstände 48, 48a vorgesehen, die einstellbar sind und mit denen die Antriebsmotoren 20 bzw. 20 a und damit die zugehörigen Frischluftventilatoren 8 bzw. 8a in ihren Drehzahlen einzeln justiert werden können (die Drehzahl kann beispielsweise jeweils um ca. 20% reduziert werden).

Wie bereits erwähnt worden ist, kann die Wärmebehandlungsvorrichtung durch das zuvor erläuterte Regelverfahren vollkommen automatisch arbeiten.

**Patentansprüche:**

1. Vorrichtung zur Wärmebehandlung von bahnförmigem Gut in mehreren Behandlungszonen mittels Heissluft, die innerhalb der einzelnen Behandlungszonen als Umluft umgewälzt wird, wobei ein Teil des umgewälzten Luftstromes als Fortluft aus der Behandlungszone abgezogen und durch Frischluft ersetzt wird, enthaltend in den einzelnen Behandlungszonen einen Umluftventilator, eine Einrichtung zur Aufheizung des Umluftstromes sowie einen Wärmetauscher zur Erwärmung der Frischluft durch die Fortluft, gekennzeichnet durch die Kombination folgender Merkmale:

a) Zur Zuführung der Frischluft ist ein gesonderter, zwischen der Aussenatmosphäre und dem Wärmetauscher (11) angeordneter Ventilator (8) vorgesehen.

b) die Frischluft-Austrittsseite des Wärmetauschers (11) mündet in den Teil des Innenraumes der Behandlungszone ein, an den die Ansaugseite der Einrichtung (4) zur Aufheizung des Umluftstromes angeschlossen ist,

c) die Ansaugseite des Umluftventilators (3) ist an der Austrittsseite der Einrichtung zur Aufheizung des Umluftstromes angeordnet.

2. Vorrichtung nach Anspruch 1, dadurch gekennzeichnet, dass der zur Zuführung von Frischluft dienende Ventilator (8) in seiner Drehzahl regelbar ist.

3. Verfahren zum Betrieb einer Vorrichtung nach den Ansprüchen 1 und 2, wobei die Menge der Fortluft in Abhängigkeit von der Feuchte der Fortluft geregelt wird, dadurch gekennzeichnet, dass die zugeführte Frischluft gleichfalls in Abhängigkeit von der Feuchte der Fortluft geregelt wird.

4. Vorrichtung nach den Ansprüchen 1 und 2 zur Durchführung des Verfahrens nach Anspruch 3, enthaltend eine für alle Behandlungszonen gemeinsame Regeleinrichtung zur Konstanthaltung der Feuchte der Fortluft durch Regelung der Fortluftmenge, dadurch gekennzeichnet, dass an diese Regeleinrichtung (33, 34) ein Folgeregler zur gemeinsamen Regelung der Frischluft-Ventilatoren (8, 8a) der einzelnen Behandlungszonen (32a, 32b) angeschlossen ist.

5. Vorrichtung nach Anspruch 4, dadurch gekennzeichnet, dass die zu den Frischluft-Ventilatoren (8, 8a) der einzelnen Behandlungszonen (32a, 32b) gehörende Teile der Schaltung des Folgereglers (43) Einstellelemente zur gesonderten Justierung der einzelnen Frischluft-Ventilatoren enthalten.

6. Vorrichtung nach Anspruch 1, dadurch gekennzeichnet, dass der zur Zuführung von Frischluft dienende Ventilator (8) zusammen mit seinem Antriebsmotor (20) in einem an der Aussenseite der Behandlungszone angeordneten Frischluft-Zuführungsschacht (19) angeordnet ist.

7. Vorrichtung nach Anspruch 1, dadurch gekennzeichnet, dass der zur Zuführung von Frischluft dienende Ventilator (8) als Querstrom-Ventilator mit 180°-Durchgang ausgebildet ist.

8. Vorrichtung nach Anspruch 1, dadurch gekennzeichnet, dass der Wärmetauscher (11) als Kreuzstrom-Wärmetauscher mit einer von oben nach unten durch den Wärmetauscher verlaufenden Strömungsrichtung (Pfeil 29) des Fortluftstromes ausgebildet ist.

9. Vorrichtung nach Anspruch 6 und 8, dadurch gekennzeichnet, dass der unterste Teil des Wärmetauschers (11) als eine schubladenartig herausziehbare Kondensat-Auffangwanne (25) ausgebildet ist, an die sich ein zur Decke der Behandlungszone führender Frischluft-Abführungsschacht (19) anschliesst.

10. Vorrichtung nach Anspruch 9, dadurch gekennzeichnet, dass der Wärmetauscher (11) und der Frischluft-Zuführungsschacht (19) von einem Teil der Seitenwand der Behandlungszone getragen werden, der als eine mit den genannten Elementen (11, 18) nach aussen schwenkbare Tür (17) ausgebildet ist.

11. Vorrichtung nach Anspruch 10, dadurch gekennzeichnet, dass der Wärmetauscher (11) leicht lösbar durch Eigengewicht in einem unteren Rahmen (52) gehalten ist und dass ein gelenkig mit der Tür (17) verbundener und einen Filter (27) tragender oberer Klemmrahmen (26) die Klemmverbindung zwischen dem Wärmetauscher (11) und der Tür (17) herstellt.

12. Vorrichtung nach Anspruch 1, dadurch gekennzeichnet, dass die Einrichtung zur Aufheizung des Umluftstromes durch eine Brennkammer (4) mit direkter Beheizung des Umluftstromes gebildet wird.

13. Vorrichtung nach Anspruch 1, dadurch gekennzeichnet, dass die Einrichtung zur Aufheizung des Umluftstromes als indirekter Wärmetauscher ausgebildet ist.

**Revendications**

1. Dispositif de traitement thermique de produit en nappe dans plusieurs zone au moyen d'air chaud qui est mis en circulation à l'intérieur des différentes zones de traitement, une partie du courant d'air en circulation étant soutirée de la zone de traitement sous forme d'air d'évacuation et remplacée par de l'air frais, ledit dispositif comprenant dans les différentes zones de traitement un ventilateur de circulation, un dispositif de chauffage du courant d'air en circulation ainsi qu'un échangeur de chaleur destiné à échauffer l'air frais au moyen de l'air d'évacuation, ledit dispositif étant caractérisé par la combinaison des particularités suivantes:

a) un ventilateur particulier (8) monté entre l'atmosphère extérieure et l'échangeur de chaleur (11) est prévu pour l'arrivée d'air frais,

b) la sortie d'air frais de l'échangeur de chaleur (11) débouche dans la partie du volume interne de la zone de traitement à laquelle est raccordée l'aspiration du dispositif (4) de chauffage du courant d'air en circulation et l'aspiration du ventilateur de circulation (3) est disposée sur la sortie du dispositif de chauffage du courant d'air en circulation.

2. Dispositif selon la revendication 1, caractérisé en ce que la vitesse du ventilateur (8) destiné à l'arrivée d'air frais est réglable.

3. Procédé d'exploitation d'un dispositif selon les revendications 1 et 2, le débit de l'air d'évacuation étant réglé en fonction de l'humidité de cet air, caractérisé en ce que l'arrivée d'air frais est également réglée en fonction de l'humidité de l'air d'évacuation.

4. Dispositif selon les revendications 1 et 2 et destiné à la mise en œuvre du procédé selon la revendication 3, comprenant un dispositif de réglage commun à toutes les zones de traitement et destiné à maintenir l'humidité de l'air d'évacuation à une valeur constante par réglage du débit de cet air, caractérisé en ce qu'un régulateur en cascade raccordé à ce dispositif de réglage (33, 34) assure le réglage commun des ventilateurs (8, 8a) d'arrivée d'air frais des différentes zones de traitement (32a, 32b),

5. Dispositif selon la revendication 4, caractérisé en ce que les parties du circuit du régulateur en cascade (43) se rapportant aux ventilateurs (8 8a) d'apport d'air frais dans les différentes zones de traitement (32, 32a) comprennent des éléments de réglage destinés à l'ajustement individuel de ces différents ventilateurs.

6. Dispositif selon la revendication 1, caractérisé en ce que le ventilateur (8) destiné à l'arrivée d'air frais est disposé avec son moteur de commande (20) dans une tubulure (19) d'admission d'air frais disposée sur le côté extérieur de la zone de traitement.

7. Dispositif selon la revendication 1, caractérisé en ce que le ventilateur (8) destiné à l'arrivée d'air frais est du type à courant transversal et à passage sur 180°.

8. Dispositif selon la revendication 1, caractérisé en ce que l'échangeur de chaleur (11) est du type à courants croisés et dans lequel descend le courant d'air d'évacuation (flèche 29).

9. Dispositif selon les revendications 6 et 8, caractérisé en ce que la partie inférieure de l'échangeur de chaleur (11) est conformée en cuvette (25) collectrice de condensat qui peut être extraite à la manière d'un tiroir et à laquelle se raccorde une tubulure (18) de sortie de l'air d'évacuation qui mène vers le toit de la zone de traitement.

10. Dispositif selon la revendication 9, caractérisé en ce que l'échangeur de chaleur (11) et la tubulure (19) d'arrivée d'air frais sont supportés par une partie de la cloison latérale de la zone de traitement qui est conformée en porte (17) pouvant osciller vers l'extérieur avec les éléments mentionnés (11, 19).

11. Dispositif selon la revendication 10, caractérisé en ce que l'échangeur de chaleur (11) est maintenu par son poids propre à l'intérieur d'un châssis inférieur (52) de manière à pouvoir être facilement enlevé et un châssis supérieure de serrage (26) articulé sur la porte (17) et supportant un filtre (27) assure la fixation de l'échangeur (11) sur la porte (17).

12. Dispositif selon la revendication 1, caractérisé en ce que le dispositif de chauffage du courant d'air de circulation est formé d'une chambre de combustion (4) à chauffage direct de ce courant.

13. Dispositif selon la revendication 1 caractérisé en ce que le dispositif de chauffage du courant d'air de circulation est conformé en échangeur de chaleur indirect.

## Claims

1. Apparatus for heat treatment of lengths of material in a plurality of treatment zones by means of hot air which is circulated within the individual treatment zones as circulating air, in which a proportion of the circulating air stream is extracted from the treatment zone as exhaust air and replaced by fresh air, containing in the individual treatment zones a circulating air blower, an arrangement for heating the circulating air stream and a heat exchanger for heating the fresh air through the exhaust air, characterised by the combination of the following features:

a) a separate blower (8) arranged between the external atmosphere and the heat exchanger (11) is provided in order to supply the fresh air,

b) the fresh air discharge side of the heat exchanger (11) opens into the part of the interior of the treatment zone to which the intake side of the arrangement (4) for heating the circulating air stream is connected,

c) the intake side of the circulating air blower (3) is arranged on the discharge side of the arrangement for heating the circulating air stream.

2. Apparatus as claimed in claim 1, characterised in that the speed of the blower (8) which serves to supply fresh air can be regulated.

3. Method of operating apparatus as claimed in claims 1 and 2, which the quantity of exhaust air is regulated as a function of the moisture content of the exhaust air, characterised in that the fresh air supply is also regulated as a function of the moisture content of the exhaust air.

4. Apparatus as claimed in claims 1 and 2 for carrying out the method as claimed in claim 3, containing a regulating arrangement which is common to all the treatment zones to keep the moisture content of the exhaust air constant by regulating the quantity of exhaust air, characterised in that a follower control for common regulation of the fresh air blowers (8, 8a) of the individual treatment zones (32a, 32b) is connected to the regulating arrangement (33, 34).

5. Apparatus as claimed in claim 4, characterised in that the parts of the circuit of the follower control (43) belonging to the fresh air blowers (8, 8a) of the individual treatment zones (32a, 32b) contain adjusting elements for separate adjustment of the individual fresh air blowers.

6. Apparatus as claimed in claim 1, characterised in that the blower (8) which serves to supply the fresh air is arranged together with its drive motor (20) in a fresh air supply shaft (19) arranged on the outside of the treatment zone.

7. Apparatus as claimed in claim 1, characterised in that the blower (8) which serves to supply fresh air is constructed as a transverse flow blower with 180° passage.

8. Apparatus as claimed in claim 1, characterised in that the heat exchanger (11) is constructed as a cross-current heat exchanger in which the stream of exhaust air flows through the heat exchanger from top to bottom (arrow 29).

9. Apparatus as claimed in claims 6 and 8, characterised in that the lowest part of the heat exchanger is constructed as a condensate collecting tank (25) which can be pulled out like a drawer and to which a fresh air exhaust shaft (19) leading to the cover of the treatment zone is connected.

10. Apparatus as claimed in claim 9, characterised in that the heat exchanger (11) and the fresh air supply shaft (19) are supported by a part of the side wall of the treatment zone which is constructed as a door (17) which can be swung outwards with the said elements (11, 18).

11. Apparatus as claimed in claim 10, characterised in that the heat exchanger (11) is held by its own weight in a lower frame (52) so as to be easily releasable and an upper clamping frame (26) which is hinged with the door (17) and supports a filter (27) produces the clamp connection between the heat exchanger (11) and the door (17).

12. Apparatus as claimed in claim 1, characterised in that the arrangement for heating the circulating air stream is formed by a combustion chamber (4) with direct heating of the circulating air stream.

13. Apparatus as claimed in claim 1, characterised in that the arrangement for heating the circulating air stream is constructed as an indirect heat exchanger.

FIG.1

FIG.2

FIG.4

0 053 269

F/G. 3

# FIG.5